Europäisches Patentamt

European Patent Office

Office européen des brevets

(19)

(11) Publication number: **0 155 831 B1**

# EUROPEAN PATENT SPECIFICATION

(45) Date of publication of patent specification: **14.08.91**   (51) Int. Cl.⁵: **C04B 35/71**, C04B 35/65

(21) Application number: **85301820.8**

(22) Date of filing: **15.03.85**

(54) **Novel ceramic materials and methods of making same.**

(30) Priority: **16.03.84 US 591392**
**26.02.85 US 705787**

(43) Date of publication of application:
**25.09.85 Bulletin 85/39**

(45) Publication of the grant of the patent:
**14.08.91 Bulletin 91/33**

(84) Designated Contracting States:
**AT BE CH DE FR GB IT LI LU NL SE**

(56) References cited:
**GB-A- 1 062 410**
**US-A- 2 741 822**
**US-A- 3 244 540**
**US-A- 3 473 987**
**US-A- 3 973 977**

(73) Proprietor: **LANXIDE TECHNOLOGY COMPANY, LP.**
**Tralee Industrial Park**
**Newark Delaware 19711(US)**

(72) Inventor: **Newkirk, Marc Stevens**
**38 Quartz Mill Road**
**Newark Delaware 19711(US)**
Inventor: **Dizio, Steven Frank**
**Route 1 Box 345**
**Golts Maryland 21637(US)**

(74) Representative: **Andrae, Steffen, Dr. et al**
**DENNEMEYER & ASSOCIATES Balanstrasse 55**
**W-8000 München 90(DE)**

## Description

The present invention generally relates to a novel class of ceramic materials and methods of producing them. The ceramic materials of this invention possess a dense, polycrystalline microstructure which is unusually strong and fracture-tough as compared with conventional ceramics.

The method by which the ceramic materials of this invention are formed is based upon the discovery of conditions which produce a surprising oxidation behavior of a metallic material. When an appropriate metal or alloy (as will hereinafter be described) is exposed to an oxidizing atmosphere within a particular temperature envelope above the melting point of the metal or alloy, the liquid metal oxidizes from its surface outward, progressing toward the oxidizing atmosphere by wicking along channels which form in place of high energy grain boundaries in the otherwise impermeable oxide structure. New oxide material is continually formed by reaction of the liquid metal with the oxidizing vapor, thus "growing" a ceramic oxide structure interconnected primarily along low energy grain boundaries. The resulting material also contains some or all of the constituents of the parent metal or alloy dispersed in metallic form throughout the microstructure in either interconnected or isolated arrangement, and present to a greater or lesser degree depending upon process conditions as shall be elaborated further herein. The uniformly dispersed metallic material and dense nature of the oxide-metal structure appear to account for the high fracture toughness of the resultant ceramics.

The materials of this invention can be grown with substantially uniform properties throughout their cross-section to thicknesses heretofore unachievable by conventional processes for producing dense ceramic structures. The process which yields these materials also obviates the high costs associated with fine uniform powder preparation and pressing techniques, characteristic of conventional ceramic production methods.

Ceramics have, in recent years, been increasingly considered as candidates for structural applications historically served by metals. The impetus for this substitution has been the superior properties of ceramics, such as corrosion resistance, hardness, modulus of elasticity, and refractory capabilities when compared with metals, coupled with the fact that the engineering limits of performance of many modern components and systems are now gated by these properties in conventionally employed materials. Examples of areas for such prospective substitution include engine components, heat exchangers, cutting tools, bearings and wear surfaces, pumps and marine hardware.

However, the key to enabling the substitution of ceramics for metals in such structural applications has been the cost-effective development of improved strength and fracture toughness characteristics in ceramics to allow their reliable employment in design environments involving tensile loading, vibration, and impact. To date, the efforts to produce high strength, reliable monolithic ceramics have focused upon improved powder processing technologies, which, while indeed achieving an improvement in the state-of-the art in ceramic performance characteristics, have been complicated and generally less than cost-effective. Emphasis in such conventional powder processing technologies has been in two areas: 1) improved methods of producing ultra-fine, uniform powder materials using sol-gel, plasma, and laser techniques, and 2) improved methods of densification and compaction, including superior sintering techniques, hot pressing and hot isostatic pressing. The objective of such efforts is to produce dense, fine-grained, flaw-free microstructures, and such methods have, in fact, produced improved structural performance capabilities in ceramics. However, the effect of these developments in conventional technologies even though improved ceramic structures have resulted, has been to dramatically increase the cost of ceramics as a class of engineering materials.

Another limitation in ceramic materials engineering which is not only unsolved, but in fact, is aggravated by modern ceramic processing improvements is scaling versatility. Conventional processes aimed at densification (i.e. removal of voids between powder particles) are incompatible with large one-piece structural application possibilities for ceramics, such as monolithic furnace liners, pressure shells, boiler and superheater tubes, etc. Problems of process residence times and compaction forces increase dramatically with increased part dimensions. Process equipment pressure chamber wall thicknesses (for hot isostatic pressing) and die dimensions (for hot pressing) increase geometrically with increased overall ceramic product dimensions.

It is the object of the present invention to provide a method for producing a self-supporting ceramic article which possesses a dense, polycrystalline microstructure which is unusually strong and fracture-tough as compared with conventional ceramics using a process that is simpler and lower in cost in comparison to the previously described conventional methods of making ceramic articles of such type and that has the capacity for reliably producing large size and/or thick section ceramics.

According to the present invention, this object is achieved by

a method for producing a self-supporting ceramic article by oxidation of a liquid-phase parent metal in the presence of a vapor-phase oxidizing environment to form a polycrystalline oxidation reaction product characterized in that the oxidation reaction product consists essentially of (1) a ceramic phase consisting of the oxidation reaction product of said parent metal with the vapor-phase oxidant, and (2) a metallic phase consisting of one or more non-oxidized constituents of said parent metal, and that the method comprises

(a) heating a parent metal which contains at least one dopant alloyed into said parent metal to a temperature above the melting point of said parent metal to form a body of molten metal and, at said temperature,

(b) reacting said body of molten metal with said vapor-phase oxidant to form said oxidation reaction product,

(c) maintaining the surface of the oxidation reaction product in contact with said oxidant to draw molten metal through the oxidation reaction product towards the oxidant so that oxidation reaction product continues to form at the interface between the oxidant and previously formed oxidation reaction product, and

(d) continuing said reaction for a time sufficient to produce said ceramic article.

The ceramic articles which can be produced in accordance with the method and which have the desired combination of unusual properties are new articles which are formed of a material which essentially consists of (1) a ceramic phase consisting of the polycrystalline product of the oxidation reaction of a parent metal with a vapor-phase oxidant and (2) between 2% and 35% by volume of a metallic constituent consisting of one or more non-oxidized constituents of the parent metal, wherein substantially all of the grain boundaries of said oxidation reaction product have an angular mis-match of less than $20°$.

Preferred embodiments of the invention are set forth in the dependant claims.

Occasionally, in the past, oxidation of metals has been contemplated as a conceptually attractive approach to the formation of an oxide-type ceramic body. As used herein and in the accompanying claims, the term "oxide" is intended to mean any oxidized state of a metal whereby such metal has given up electrons to or shared electrons with any other element or combination of elements to form a compound, and is intended to cover, for example, metal compounds with oxygen, nitrogen, the halogens, carbon, boron, and combinations thereof, etc. The basic process for which the ceramic materials of this invention are formed represents the discovery of necessary and sufficient conditions to produce a surprising oxidation behavior of a metal. In order to properly appreciate the significance of the discovery, the reader may find it useful to review briefly what has been previously known about the general oxidation behavior of metals and the previous limited use of metal oxidation as a mechanism for generating ceramic bodies.

Metals classically oxidize in one of four general modes. First, some metals oxidize when exposed to an oxidizing environment to form an oxide which either flakes, spalls or is porous, such that the metal surface is continually exposed to the oxidizing environment. In such a process, a free-standing oxide body is not formed as the metal oxidizes, but rather, a mass of oxide flakes or particles is formed. Iron, for example, oxidizes in such a manner.

Secondly, certain metals (e.g. aluminum, magnesium, chromium, nickel or the like) are known to oxidize in such a manner as to form a relatively thin, protective oxide skin which transports either oxygen or metal, at such a low rate that the underlying metal is effectively protected from further oxidation. This mechanism does not yield a free-standing oxide structure of a thickness sufficient to exhibit any significant structural integrity.

Thirdly, certain other metals are known to form a solid or liquid oxide film which does not protect the underlying parent metal because such oxides permit the transport of oxygen therethrough. While an oxygen-permeable film may retard the oxidation rate of the underlying metal, the metal itself is not totally protected by the film due to oxygen-permeability thereof. An example of this latter type of oxidation occurs in the case of silicon, which, when exposed to air at elevated temperatures, forms a glassy skin of silicon dioxide which is permeable to oxygen. Typically these processes do not occur at nearly fast enough rates to produce a useful thickness of ceramic oxide material.

Finally, other metals are known to form oxides which, under formation conditions, volatize and continually expose fresh metal to oxidation. Tungsten is an example of metals which oxidize in this manner.

None of these classical oxidation modes offers significant potential for the formation of oxide ceramic materials for the reasons cited. However, as a variation of the second mode described above, one can add fluxes to the surfaces of metals to dissolve or break up their oxides and render them susceptible to oxygen or metal transport, allowing the development of thicker oxide skins than might otherwise be naturally possible. Still, however, the capacity to form free-standing oxide structures by such a technique is limited to thin sections of relatively limited strength. Such a technique may be employed on metal powders to oxidize their surfaces in admixture with other particulates to yield intrinsically porous low strength ceramics as

3

described in U.S. Patent No. 3,255,027 to H. Talsma and U.S. Patent No. 3,299,002 to W.A. Hare. Alternatively, similar methods may be used to produce thin walled $Al_2O_3$ refractory structures (U.S. Patent NO. 3,473,987 to D.R. Sowards and U.S. Patent No. 3,473,938 to R.E. Oberlin) or thin walled hollow refractory particles (U.S. Patent No. 3,298,842 to L.E. Seufert). However, a characteristic of such processes is the limited thickness of oxide which is formed as the reaction product, apparently because the effect of a fluxing agent is of relatively short duration such that the oxide reverts to a slow-growing, protective character after only a limited amount of growth. Increasing the flux concentration, to promote thicker oxide skin growth, results in a lower strength, less refractory, lower hardness product and, therefore, is counterproductive.

One technique which has been successfully employed to create free-standing ceramics by the oxidation of metals involves an oxidation/reduction or "redox" type reaction. It has long been known that certain metals will reduce other metal oxides to form a new oxide and a reduced form of the original oxide. Use of such redox-type reactions to produce ceramic materials has been employed, for example, as described in U.S. Patent Nos. 3,437,468 to L.E. Seufert and 3,973,977 to L.E. Wilson. The primary disadvantage of the redox-type reactions described in Seufert '468 and Wilson '977 is the inability to produce a singular, hard, refractory oxide phase; that is, the products of such described redox-type reactions contain multiple oxide phases which can degrade the hardness, modulus of rupture and wear resistance relative to a structure containing only a single desired oxide phase.

The present invention involves a unique and novel oxidation phenomenon which differs from any of the classical oxidation modes and which overcomes the difficulties and limitations of the existing processes, as will become clearer to the reader after careful consideration is given to the description of the invention and of the preferred embodiments thereof which follow.

Reference will hereinafter be made to the accompanying drawings wherein:

FIGURE 1 is a graph showing relative weight gain as a function of temperature for an aluminum parent metal system doped with 3% silicon and various magnesium concentrations and oxidized in air;

FIGURE 2 is a graph showing the relative weight gain for various silicon dopant concentrations with constant magnesium dopant concentration as a function of temperature for an aluminum parent metal system oxidized in air;

FIGURE 3 is a photograph of a cross-section of a ceramic structure produced in accordance with Example 2 using 10% silicon and 2% magnesium doped aluminum at a setpoint temperature of 1300°C;

FIGURE 4 is a photomicrograph taken at 400X magnification of a ceramic structure produced in accordance with Example 2 using 1% silicon and 2% magnesium doped aluminum alloy at a setpoint temperature of 1150°C, showing a nonporous microstructure;

FIGURE 5 is a photomicrograph taken at 400X magnification of a closed cell porous ceramic structure produced in accordance with Example 2 using 3% silicon and 2% magnesium doped aluminum alloy at a setpoint temperature of 1300°C;

FIGURE 6 is a photomicrograph taken at 400X magnification showing an open cell porous ceramic structure produced in accordance with Example 2 using 10% silicon and 2% magnesium doped aluminum alloy at a setpoint temperature of 1300°C;

FIGURE 7 is a photomicrograph taken at 400X magnification of a dense, low porosity ceramic structure produced in accordance with Example 2 using 5% silicon and 2% magnesium doped aluminum alloy at a setpoint temperature of 1350°C;

FIGURE 8 is a photomicrograph taken at 1.6X magnification of a ceramic structure produced in accordance with Example 2 using 3% silicon and 2% magnesium doped aluminum alloy at a setpoint temperature of 1400°C;

FIGURES 9a-9c are a compilation of X-ray diffraction patterns comparing $Al_2O_3$, elemental aluminum, and a ceramic structure produced in accordance with Example 2, respectively;

FIGURE 10 is an element distribution plot (at 80X magnification) of a ceramic structure of the present invention showing magnesium and aluminum concentration distributions determined by energy dispersive X-ray analysis; and

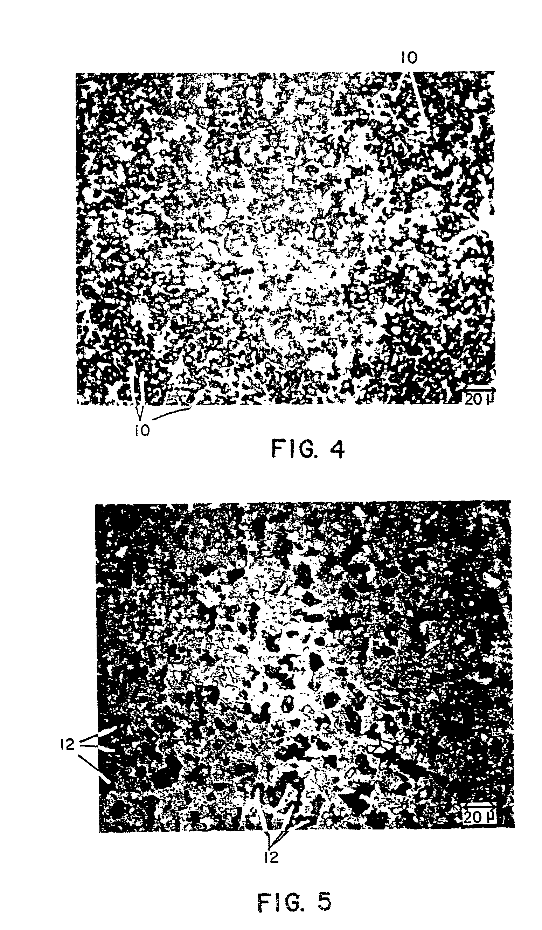

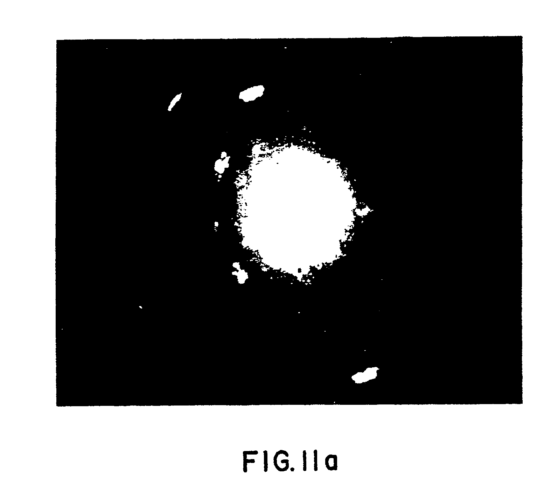

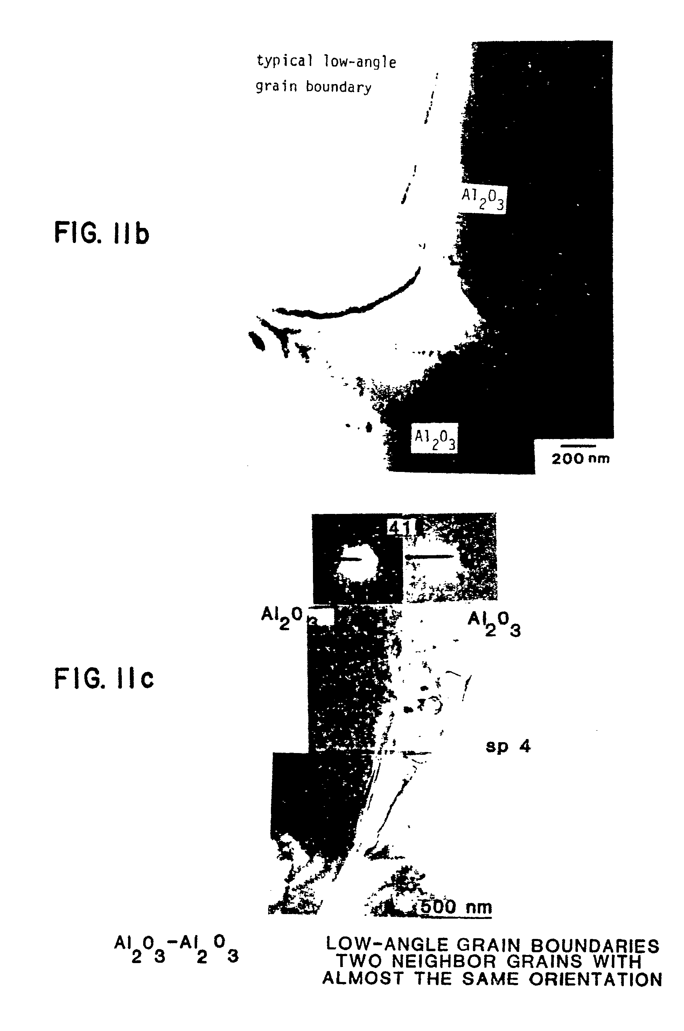

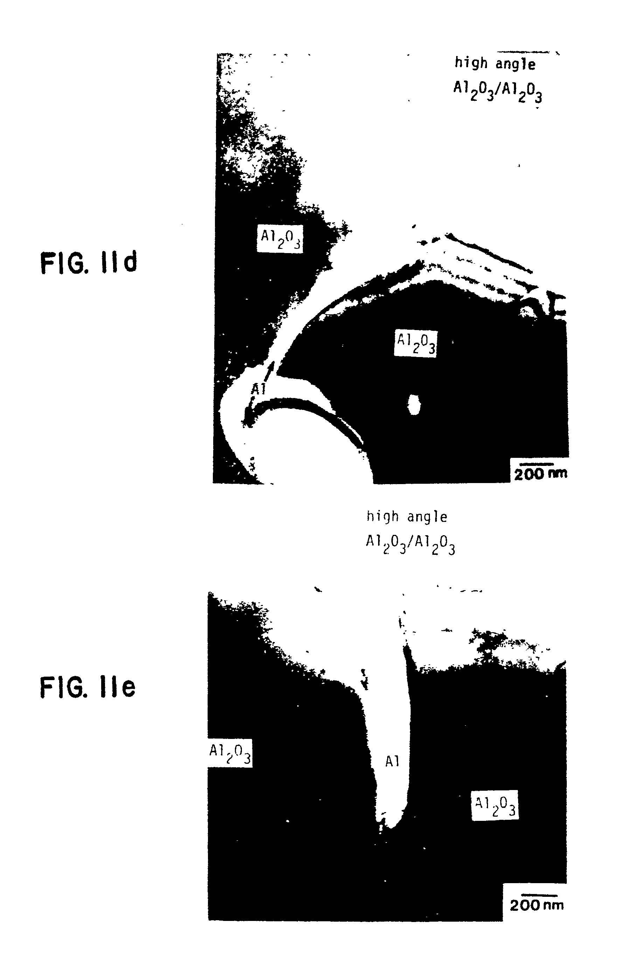

FIGURE 11a-11e are a compilation of additional microstructural information obtained on specimens produced under conditions similar to those used for the specimen of FIGURE 4; (a) Laue X-ray diffraction pattern representative of a typical large area of the material after removing the aluminum phase; (b) and (c) transmission electron micrographs of typical low angle grain boundaries commonly observed throughout the specimen; (d) and (e) transmission electron micrographs of both of the high angle grain intersections found in the sample showing in both cases the presence of a metal phase channel between the grains.

The invention herein disclosed is based upon the discovery that useful ceramic materials can be formed by a novel oxidation process at the interface between a molten metal and a vapor phase oxidant. Under the proper process conditions, the molten metal is drawn into and through the oxide reaction product to cause continued growth of oxide at the oxide/atmosphere interface. The resulting ceramic product is comprised of an oxide phase which is interconnected largely through relatively low energy grain boundaries and a metal phase (or porosity in place of the metal phase) also at least partially interconnected.

Under the special conditions of the process invention, molten metal is transported through the oxide along certain of the intersections of the oxide crystallites. This occurs by virtue of a preferred wetting phenomenon which leads to the formation of channels of liquid metal where grain boundaries of relatively high surface energy would otherwise form in the oxide. The preferred wetting phenomenon involves two special requirements concerning interfacial energies: (1) the liquid metal must wet the oxide phase, i.e. $\delta SL$ < $\delta SG$, where $\delta SL$ denotes the energy of the oxide-molten metal interface and $\delta SG$ refers to the interface between the oxide and the gaseous atmosphere, and (2) the energy of some of the grain boundaries, $\delta B$, is greater than twice the solid-liquid interfacial energy, i.e. $\delta BMAX > 2 \delta SL$, where $\delta BMAX$ is the maximum grain boundary energy in the oxide. In such circumstances, grain boundaries either will not form or will spontaneously decompose in favor of a molten metal channel bounded by two oxide-metal interfaces.

It is well understood that any polycrystalline material exhibits a range of grain boundary energies depending on the degree of angular misalignment between the two adjacent grains. Thus, in general, grain boundaries of low angular misalignment exhibit low surface energies, while high angle boundaries have large surface energies, although the relationship is usually not a simple, monotonically increasing function of angle due to the occasional occurrence of more favorable atomic alignments at intermediate angles.

Thus, under appropriate process conditions the sites in the oxide reaction product where crystallites of high angular misalignment intersect become channels along which the molten metal transports by a wicking action. Since the channels are interconnected (just as the grain boundaries of a polycrystalline material are interconnected), molten metal is transported through the oxide to its surface with the oxidant atmosphere, where the metal is oxidized, resulting in continued oxide growth. Furthermore, since the wicking of molten metal along channels is a much faster transport process than the ionic conduction mechanisms of most normal oxidation phenomena, the oxide growth rate observed with the process of the present invention is much faster than that typically observed in other oxidation phenomena which also lead to the formation of a coherent reaction product layer.

While the oxide product of the present invention is interpenetrated by metal along high energy grain boundary sites, the oxide phase is itself interconnected in three dimensions along relatively low angle grain boundaries which do not meet the criterion $\delta B > 2 \delta SL$. Thus, the product of this invention exhibits many of the desirable properties of the pure solid oxide material (e.g. hardness, refractories, strength, etc.) while deriving additional benefit from the presence of the distributed metal phase (notably higher toughness and resistance to fracture).

Although it is not intended that the invention should be limited by any particular theory of operation, it is believed that, when the material in accordance with the invention is formed, substantial transport of the molten metal takes place only along those grain boundaries which have an angular mis-match of greater than a particular value, for example 20°. This results in the production of an oxide material in which those grain boundaries having an angular mis-match of greater than the particular value become filled, and thus substantially all the grain boundaries in this resulting oxide material have an angular mis-match of less than the said particular value.

Accordingly, in one aspect of the invention, there is provided a material comprised of a three dimensionally interconnected polycrystalline oxide structure containing between 2% and 35% by volume of a metallic constituent, wherein substantially all of the grain boundaries of said oxide have an angular mis-match of less than 20°. The mis-match of the grain angle may be determined, for example by crystallographic method, or photomicrography, or any other appropriate known method.

In a second aspect of the invention, there is provided a method for producing a self supporting ceramic structure by oxidation of a liquid phase parent metal or metal alloy with a vapor phase oxidizing environment comprising the steps of:

a. choosing a combination of a parent metal or metal alloy and an oxidizing environment which will form a stable polycrystalline oxide as their reaction product, and which polycrystalline oxide reaction product has a surface energy relationship with the molten parent such that at least within some portion of the temperature region in which 1) the polycrystalline oxide reaction product is stable, and 2) the parent metal is molten, at least some of the grain boundaries of the polycrystalline oxide are such as to allow the molten parent metal to migrate through the polycrystalline oxide reaction product (this will generally happen when the grain boundaries are unstable relative to the alternative configuration of two geometrically equivalent oxide/parent metal interphase boundaries) and

EP 0 155 831 B1

b. maintaining said parent metal in said oxidizing environment and within said portion of said temperature region so as to allow the molten parent metal to migrate through said polycrystalline oxide reaction product as the reaction product forms, along the said oxide grain boundaries, thus resulting in the parent metal being transported through its oxide reaction product, and thereby present molten parent metal at the interface between said polycrystalline oxide reaction product and said oxidizing environment, and thereby growing a ceramic structure comprised of essentially said oxide reaction product and at least some of the parent metal or alloy.

In accordance with yet a further aspect of the invention, there is provided a material comprised of a three dimensionally interconnected polycrystalline oxide structure containing dispersed inclusion of one or more metals, which inclusions constitute from 2 to 12 percent of said material by volume and which inclusions are substantially non-interconnected.

Certain pure metals under a specific set of conditions of temperature and oxidant atmosphere may naturally meet the interfacial energy requirements necessary for the oxidation phenomenon of the present invention. However, it has been discovered herein that the addition of certain elements ("accelerator dopants") to the metal can favourably influence one or more of the interfacial energies to meet the criteria described above. For example, a dopant or combination of dopants which reduces the solid-liquid interfacial energy will tend to promote the conversion of a protective, polycrystalline oxide film into one containing channels for molten metal transport as required for the new process.

Another important feature of this invention is the ability to influence and control the micro-structure and properties of the resultant ceramic products by modifying the surface energies. Thus, for example, creating process conditions which decrease the solid-liquid interface energy relative to the range of grain boundary energies in the oxide will produce a structure which contains an increased amount of metal and a reduced degree of interconnectivity of the oxide phase. Obviously, a change of relative surface energies in the opposite direction produces a more interconnected oxide structure with less metal phase present (fewer metal transport channels are formed). Such changes may be effected by changing the nature or concentration of dopants or by changing the oxidation environment (temperature or atmosphere). As a consequence of this process feature, the properties of the resultant material can be tailored to a relatively high degree, from properties approaching those of the pure ceramic at one extreme, to properties (such as toughness and electrical conductivity) which are highly influenced by the presence of 25 to 30 percent by volume or more of the metal phase at the other extreme.

It has also been discovered that another class of elements ("initiator dopants") can play an important role in the initiation of the aforementioned ceramic growth phenomenon, apparently either by serving as a nucleating agent for the formation of stable oxide crystallites, or by disrupting an initially passive oxide layer in some fashion or both. While an initiator dopant may not be necessary to create the ceramic growth phenomenon of the present invention, it may well be important in reducing any incubation period for the initiation of such growth to within commercially viable limits for certain parent metal systems.

The present invention was first discovered using molten aluminum or aluminum alloys as the parent metal, forming alpha aluminum oxide as an interconnected oxide reaction product, using air or oxygen as the vapor phase oxidant. While the preferred embodiments to be described in this section are based on aluminum alloy systems, the mechanisms demonstrated are generic and potentially applicable to a wide range of parent metal and oxidant systems.

The present invention is based upon the surprising discovery that the traditional oxidation behavior of a metal such as aluminum can be altered by the addition of certain dopants to the metal or its alloy to create a completely novel metal oxidation behavior. The dopants cause the underlying metal, when raised to a certain temperature region above its melting point, to be transported through its own otherwise impervious polycrystalline oxide skin, thus exposing fresh metal to the oxidizing environment, to thereby yield further oxide through which the metal continues to be transported. Certain other metal systems may show similar oxidation mechanisms without the addition of dopants, under appropriate oxidation conditions.

This behavior stands in stark contrast to the normal behavior of aluminum, in which the initially formed oxide film protects the substrate metal from further oxidation from the surrounding environment. In fact, in the case of aluminum, this is not only classically true for the solid metal, which indeed would otherwise fully oxidize in air even at sub-zero temperatures, but it is known to be true for liquid aluminum as well, which remains protected by its oxide skin right up until the melting point of the oxide is reached (about 2050° C), whereupon ignition of the underlying metal finally occurs.

Both the migrating metal, liquid phase/vapor phase reaction process thus described for generating a ceramic material, and the material thus formed, are unique when compared with traditional metals oxidation mechanisms or ceramic products previously known. A dense, hard,

refractory, fracture-tough, high strength ceramic is literally "grown" by the method of the present invention to virtually any desired thickness.

While the ceramic product which results from this phenomenal oxidation behavior might, in first view, be broadly described as a cermet (a polycrystalline ceramic grain structure bonded together by a metallic phase), its physical properties are uniquely different from any classical cermet material heretofore conventionally produced (typically by pressing and sintering metallic and ceramic powders). Traditionally, the physical properties of cermets predictably reflect the expected combined properties of the contained metal phase binding the ceramic particles. For example, the softening point and electrical conductivity of a cermet would typically reflect the properties of the metallic phase contained in the cermet.

In the ceramic materials of this invention, however, the typical physical properties characteristic of traditional cermets are not present. Ceramic materials produced by the herein described oxidation mechanism from doped parent aluminum alloys show modulus of rupture (MOR) values at 1500°C (about 840°C above the melting point of the parent alloy phase) of typically 60-70% of the room temperature MOR values.-Such aluminum-derived ceramic materials of this invention typically have room temperature MOR's of 206 to 414 MPa. Electrical conductivity for the materials of the present invention also is variable depending upon dopants, processing temperatures and process atmosphere, ringing from conductivities typical of metals (less than .05 ohm resistance per 2.54 cm of length in a 1.27 cm square cross-section bar) to those typical of oxide ceramics (greater than 10 megohms resistance per 2.54 cm in a similarly dimensioned bar). See Example 2, Table 2B below.

The unexpected physical properties observed in the ceramic materials of this invention appear to be a result of the highly interconnected nature of the oxide phase of the ceramic structure. The metal phase within the structure is also at least partly interconnected, but, unlike traditional cermets, the metal does not necessarily serve as a binder for the oxide crystallites which are already directly bonded to each other. In addition, by continuing the process to completion, i.e., until as much of the metal phase as possible is oxidized, the interconnected metal is largely removed from the structure in favor of of additional oxide growth, leaving behind pores in the oxide. These facts are consistent both with the observed high temperature strength (MOR values) of the materials of this invention and the observed wide variations of electrical conductivity which are obtainable.

The doping system necessary to produce the intergranular metallic transport process and ceramic growth of the present invention has, in the case of using aluminum or its alloys as the parent metal system, and air or oxygen as the oxidant, been found to be a binary component doping system. One such component, the "initiator" dopant, has been discovered to function principally so as to allow the initiation of the special metallic transport mechanism and resulting oxide structural growth. The other component the "accelerator" dopant, impacts primarily the metal transport kinetics and therefore the ceramic structural growth rate. Concentration of either of the dopants has also been discovered to affect growth morphology.

In the case of employing aluminum or its alloys as the parent metal in the present invention and forming alpha aluminum oxide as a reaction product, magnesium metal has been discovered to be an effective initiator dopant. A range of dopant concentrations has been found to be critical in achieving the metal transport and growth initiation function, but growth morphology of the resultant ceramic product is also substantially influenced by concentration variations of the initiator dopant. The magnesium initiator dopant is applied by alloying it into the aluminum-based parent metal at temperatures below 900°C. Magnesium doping concentrations over a range of between about 0.3 to about 10 weight percent magnesium based on the total weight of the resultant doped parent metal have been found to be particularly advantageous to initiate the ceramic growth of this invention from aluminum-based parent metal. However, a range of about 1 to about 3 weight percent magnesium is usually preferable with respect to desirable growth morphologies and kinetics.

Various accelerator dopants have been discovered to be effective in promoting the reaction kinetics of the subject invention for an aluminum-based parent metal system. The accelerator dopants for the case of an aluminum-based parent metal system forming alpha aluminum oxide as the oxide reaction product, are metals which belong to Group 4B of the Periodic Table, and include silicon, germanium, tin and lead. Carbon, although a Group 4B element, is not a useful accelerator dopant for the process of this invention as applied to aluminum or its alloys due to its tendency to react to produce aluminum carbide at the process temperatures necessary to achieve metal transport and the resulting ceramic growth of this invention.

A Group 4B accelerator dopant, such as those previously described, or combinations thereof, are applied by alloying into the aluminum parent metal system. If lead is chosen for this purpose, its solution into the parent metal must be accomplished at a temperature of at least 1000°C, owing to its low solubility in aluminum, unless another alloy component (such as tin) is added to increase its solubility. Preferably, the amount of accelerator dopant added to an aluminum parent metal system is within the range of about 0.5 to about 10 weight percent of the total alloy weight, but more desirable growth kinetics and morphology are obtained with accelerator dopant concentrations in the range of about 2 to about 6 weight percent of the total parent metal alloy weight.

In the case of employing aluminum or its alloys as the parent metal to the process of the present invention, the appropriate amounts of binary dopants (initiator and accelerator) are alloyed into the parent metal, and the parent metal is then placed in a crucible or other refractory container with the metal surface exposed to an oxidizing atmosphere (usually air at standard atmospheric pressure). The parent metal is then heated within a furnace to elevate the temperature thereof in the region typically between about 1000° C to about 1450° C, in the case of forming alpha aluminum oxide as a reaction product, or more preferred, between about 1100° C to about 1350° C, whereupon the parent metal transport begins to occur through the oxide skin. The resultant continual exposure of the parent metal allows the progressive oxidation of a thicker and thicker polycrystalline oxide skin with a microfine network of parent metal along what would otherwise be the relatively high energy oxide grain boundaries of the structure thus formed. The oxide structure grows at a constant rate (that is, a substantially constant thickness growth rate over time), provided sufficient air (or oxidant atmosphere) interchange is allowed in the furnace to keep a relatively constant source of oxidant therein. Interchange of oxidant atmosphere, in the case of air, can be conveniently provided by vents in the furnace. Growth continues until at least one of the following occurs: 1) all of the parent metal is consumed; 2) the oxidant atmosphere is replaced by a non-oxidant atmosphere, is depleted of oxidant, or evacuated; or 3) the furnace temperature is altered so as to be substantially outside the envelope reaction temperature (i.e. substantially outside the region between 1000° C and 1450° C).

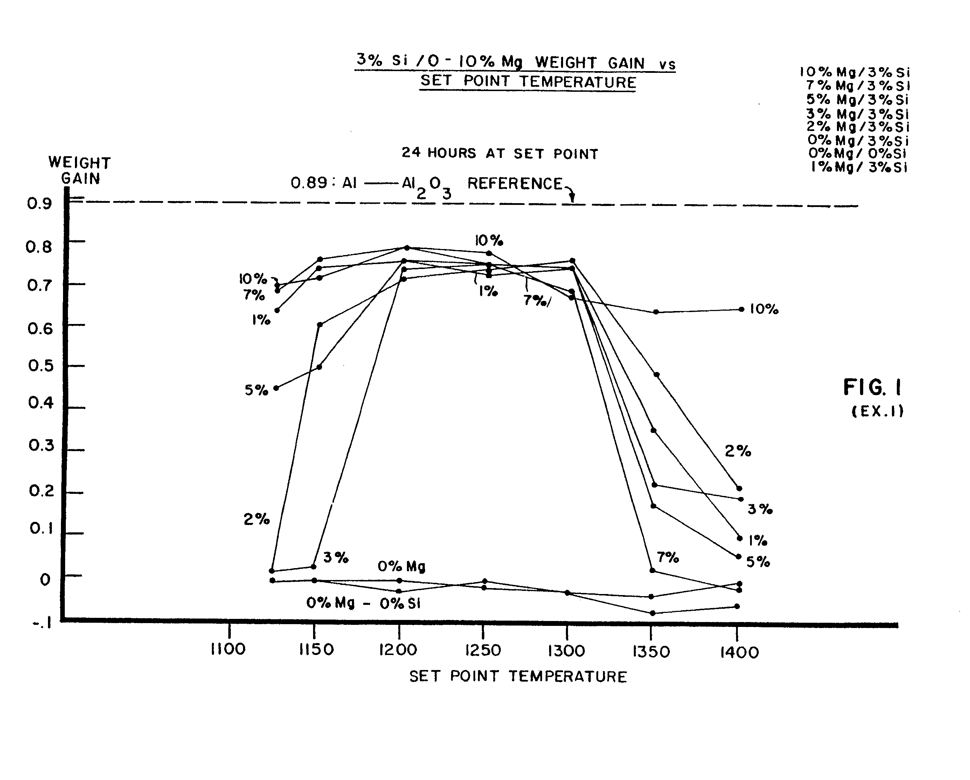

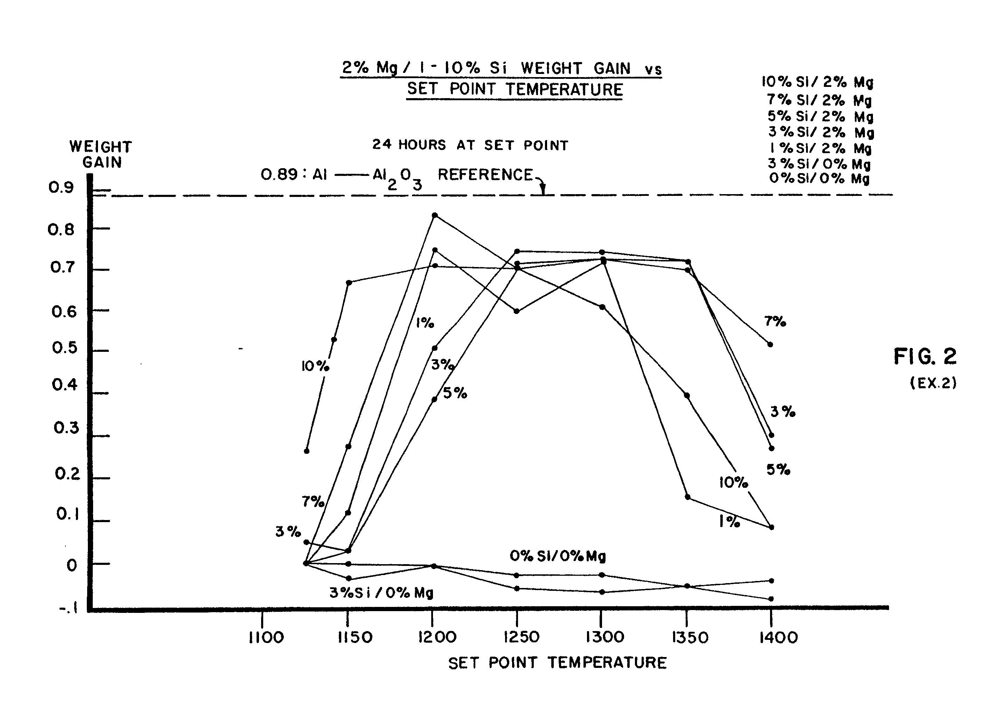

FIGURE 1 shows the relative weight gain variation as a function of furnace setpoint temperature for an aluminum parent metal system oxidized in air and doped with a constant 3% silicon as the accelerator dopant, using various concentrations of magnesium as the initiator dopant. FIGURE 2 shows the weight gain for various percentages of silicon as an accelerator dopant as a function of furnace setpoint temperatures for the same parent metal oxidant system, using a constant 2% concentration of magnesium as the initiator dopant. Total process time at temperatures for the samples of FIGURES 1 and 2 was 24 hours, and air at standard atmospheric pressure was employed as the oxidant. For comparison purposes, samples of an aluminum parent metal system having no magnesium initiator dopant in conjunction with to 0% and 3% silicon accelerator dopant, respectively, are shown revealing negligible weight gain and thus negligible growth of ceramic.

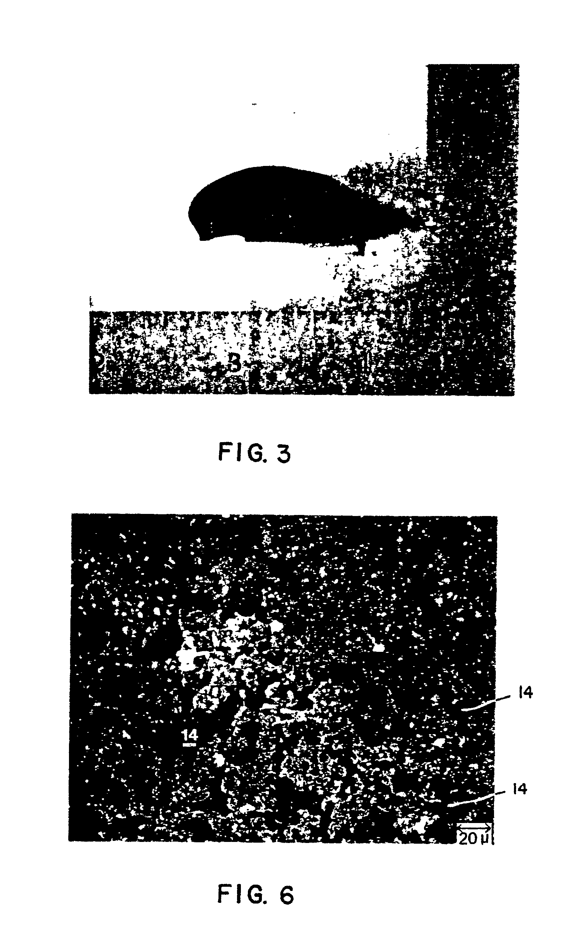

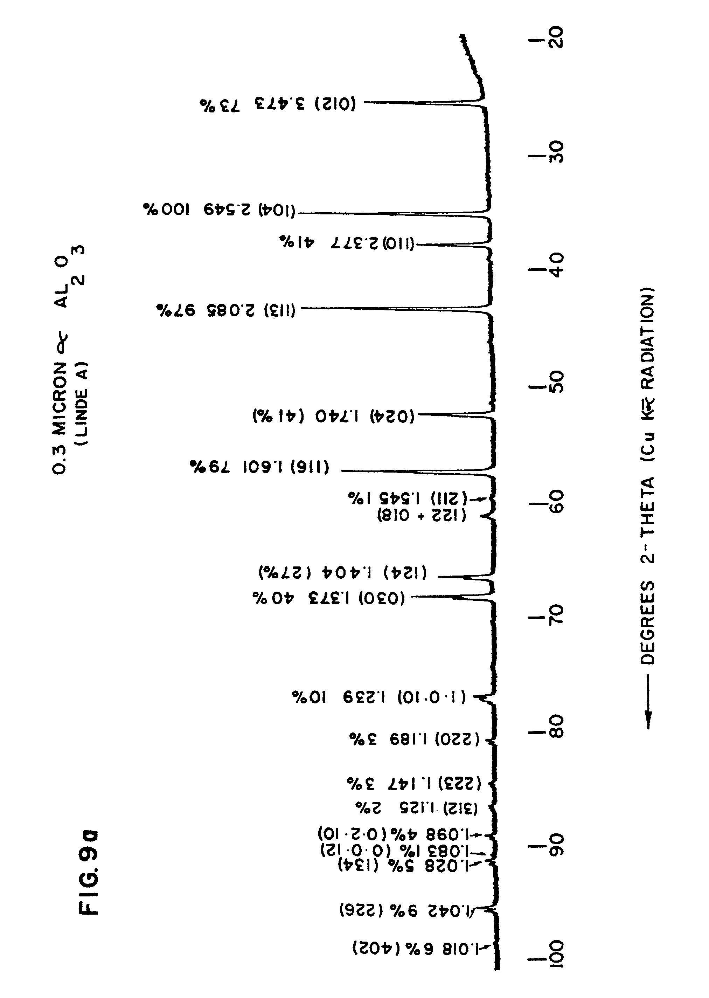

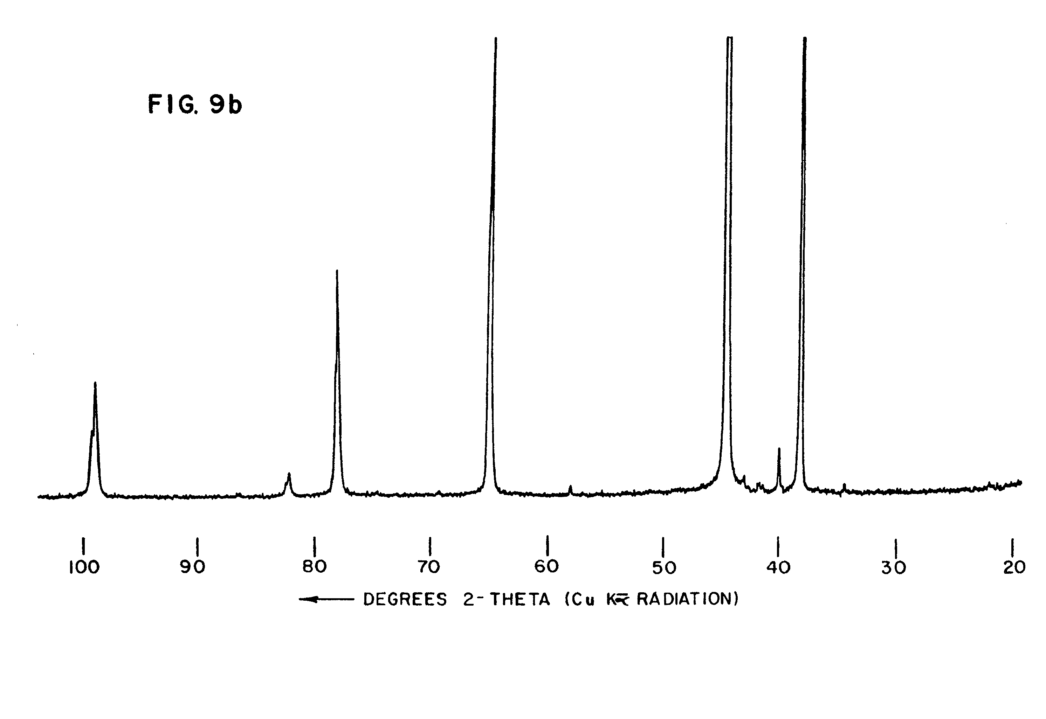

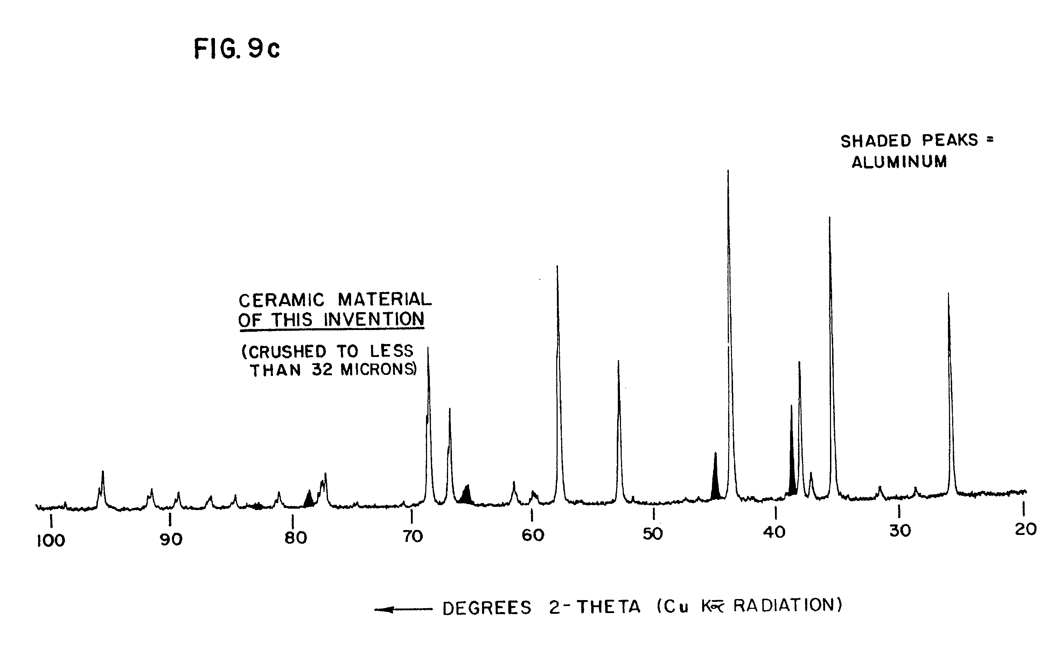

Within the range of operable process conditions wherein this oxide structural growth occurs, numerous different and reproducible product microstructures and surface morphologies are observed. Typically, rapid kinetic regions involve essentially smooth, planar surface growth. FIGURE 3 shows a photograph of such a growth condition in cross-section for a magnesium/silicon doped aluminum parent metal system. FIGURE 4 is an example of a non-porous aluminum oxide (corundum) polycrystalline oxide structure having a web of aluminum content along what would otherwise represent higher angular mismatch grain boundaries of the structure shown at a magnification of 400X. In this regard, attention is directed to accompanying FIGURES 9a-9c which depicts a comparison of X-ray diffraction patterns of $Al_2O_3$ (corundum), elemental aluminum and the ceramic material of this invention, respectively.

FIGURE 11 reveals additional details of the microstructure of specimens produced under conditions comparable to that of FIGURE 4. FIGURE 11a is an X-ray diffraction pattern using the Laue back reflection technique to reveal the $Al_2O_3$ structure in a typical large area of the sample (the metal phase in this structure was removed by etching prior to performing the X-ray analysis). The pattern of FIGURE 11a is typical of a crystalline material containing a large number of grain boundaries of small angular misorientation (up to about 5°). FIGURES 11b-e illustrate microstructural details observed using the much higher magnification capability of a transmission electron microscope. FIGURES 11b and c show typical low angle grain boundaries which were commonly observed in this material. These low angle boundaries are in all cases clear and well-defined, with no evidence of the presence of any additional grain boundary phases. High angle grain intersections or grain boundaries were observed to be very uncommon in this specimen. FIGURES 11c and e show micrographs of both of the two high angle grain intersections which were found. In both cases the common interface between the two grains includes a relatively wide channel (i.e. 100-200 $\mu$m in width) of the solidified metal phase.

Obviously, the information provided in FIGURES 4 and 11 well illustrate the microstructural effects associated with the oxidation mechanism of the present invention. Specifically, the product is shown to be in oxide structure interconnected along low angle grain boundaries and with high angle boundaries replaced by channels filled with the metallic phase or phases.

Aluminum-based metallic inclusions (10) are visible in FIGURE 4 and such inclusions form to a greater or lesser degree depending upon the growth morphology of the process, which, in turn, varies with both process temperature region and dopant types and concentrations. A more ragged, higher surface area growth surface yields larger, more complex parent metal inclusions, which occur as the structure develops voids by periodically combining lobes of the growth surfaces. These voids are then filled by transport of the metal (in such cases the void thus formed is no longer able to access the oxidizing atmosphere and metal transported therein through grain boundaries of the oxide structure remains unoxidized). If the process conditions are otherwise maintained to a point beyond the total oxide growth conversion of the original parent alloy, these metallic inclusions are retransported out to leave behind the original voids in favor of growing more of the oxide structure. An example of the resulting closed-cell porous structure is shown in the photomicrograph of FIGURE 5. As shown therein, the metal inclusions have been removed from voids (12) due to the transport described above. In no event, however, are the non-interconnecting inclusions of parent metal located along the polycrystalline oxide grain boundaries exhausted; they reside in a stable state.

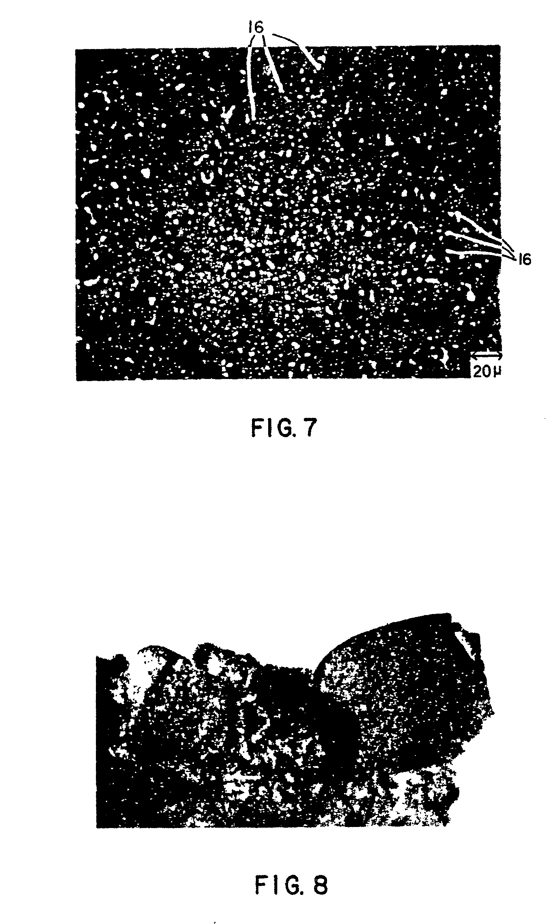

Various other microstructures are observable in the ceramic products of this invention when derived from aluminum-based parent metal systems, as illustrated in FIGURES 6 and 7, each of which are optical photomicrographs at 400X. FIGURE 6 is a polycrystalline microstructure with a preferred orientation and approximately 25-35 volume percent open cell porosity (noted as numeral 14 in FIGURE 6). FIGURE 7 is a dense, low porosity microstructure with very small-sized metallic inclusions (noted as numeral 16 in FIGURE 7). FIGURE 8 shows an extreme morphological growth variation possible within certain portions of the process parameters.

A significant feature of the process of the subject invention is the propensity for producing void-free ceramic materials, and so long as the growth process is not conducted beyond the exhaustion of the parent metal, a dense, void-free ceramic product results.

In the case of magnesium initiator-doped aluminum parent metal oxidized in an air or oxygen environment it has been discovered that the magnesium at least partially oxidizes out of the alloy before the process temperature growth region is encountered, e.g. at about 820-958°C. Here the magnesium forms a magnesium oxide and/or magnesium aluminate spinel phase at the surface of the molten aluminum alloy. During the growth process such magnesium compounds remain primarily at the initial oxide surface of the parent metal alloy (the "initiation surface") of the growing ceramic structure; the balance of such compounds are transported along at the growth front (the "growth surface") of the resulting oxide/metal ceramic structure.

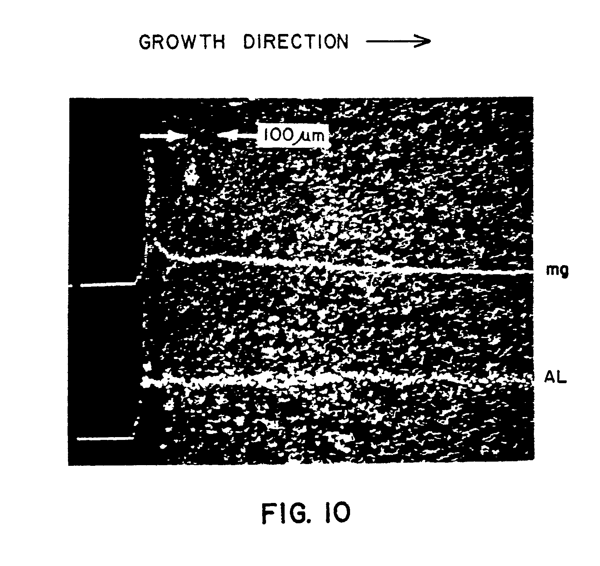

Various initiation surfaces of the ceramic materials of this invention have been examined by X-ray diffraction using $CuK\alpha$ radiation and, as shown in Table 1 below, the data corresponds to pure $MgAl_2O_4$ - (spinel). Furthermore, the presence of the spinel form at the initiation surface is consistent with the magnesium peak in FIGURE 10 which shows an X-ray probe (energy dispersive X-ray analysis) overlaying a scanning electron microscope photograph of a sample ceramic material of this invention.

## TABLE 1

| $MgAl_2O_4$ (spinel) | | | Measurements At Initiation Surfaces Of Ceramic Materials Of This Invention | |
|---|---|---|---|---|
| dA | $I/I_1$ | hKl | dA | $I/I_1$ |
| 4.66 | 35 | 111 | | |
| 2.858 | 40 | 220 | 2.871 | 40 |
| 2.437 | 100 | 311 | 2.445 | 100 |
| 2.335 | 4 | 222 | 2.331 | 2 |
| 2.020 | 65 | 400 | 2.025 | 72 |
| 1.650 | 10 | 422 | 1.652 | 11 |
| 1.5554 | 45 | 511 | 1.557 | 55 |
| 1.4289 | 55 | 440 | 1.430 | 80 |
| 1.3662 | 4 | 531 | 1.366 | 3 |
| 1.2780 | 4 | 620 | 1.279 | 3 |
| 1.2330 | 8 | 533 | 1.233 | 11 |
| 1.2187 | 2 | 622 | 1.219 | 1 |
| 1.1666 | 6 | 444 | 1.167 | 8 |
| 1.1320 | 2 | 711 | 1.131 | 3 |
| 1.0802 | 6 | 642 | 1.080 | 7 |
| 1.0524 | 12 | 731 | 1.052 | 21 |
| 1.0104 | 8 | 800 | 1.010 | 12 |
| .9527 | 2 | 822 | .952 | 3 |
| .9334 | 8 | 752 | .933 | 15 |
| .9274 | 2 | 662 | .927 | 1 |
| .9038 | 6 | 840 | .903 | 13 |
| .8872 | 2 | 911 | .886 | 1 |
| .8820 | <2 | 842 | | |
| .8616 | <2 | 664 | .861 | <1 |
| .8474 | < | 931 | .846 | 14 |
| .8249 | 18 | 844 | | |

In the cases where certain aluminum alloys have been employed as parent metal to the oxide growth mechanisms described herein, and air or oxygen has been employed as the oxidant, it has been found that an aluminum oxide-based structure is generated (apart from the relatively thin layer of magnesium-aluminate spinel at the initiation surface). Typically, non-functional alloy constituents in the parent metal (especially those metals having a lower free energy of formation for their oxides) end up being concentrated in the metallic grain boundary and metallic inclusion phases. Minor amounts of manganese, iron, copper, boron, zinc, tungsten and other metals have been found to be compatible alloy diluents which do not interfere with the growth mechanism of an aluminum-based parent metal system.

Further insight into the present invention will be gleaned by reference to the following non-limiting examples. They illustrate 1) the growth of ceramics via the herein described novel oxidation mechanisms, and 2) the use of both initiator and accelerator dopants to provoke such growth in a parent metal/oxide system which does not inherently display surface energy relationships conducive to the growth of ceramics via the mechanisms of the present invention.

### EXAMPLE 1

Seven aluminum/magnesium/silicon alloys having between 0-10% magnesium as an initiator dopant and 3% silicon as an accelerator dopant were examined at temperatures ranging between 1125° C and 1400° C to determine the effects that the magnesium initiator and temperature had with respect to growth of a

EP 0 155 831 B1

ceramic material of the present invention from an aluminum-based parent metal in air.

In each trial, a cylindrical aluminum/magnesium ingot 2.54 cm long and 2.54 cm in diameter was cast from a metal at 850°C and embedded in 220 mesh aluminum oxide refractory grain within a suitable refractory crucible. A sawed face of the ingot was exposed and was placed substantially flush to the surface of the aluminum oxide bed and roughly 0,64 cm below the top of the crucible. For each trial, the nominal furnace cycle was as follows:

| **Elapsed Time** | **Temperature (Degree C)** |
|---|---|
| 0 - 5 hours | 30 to setpoint temperature |
| 5 - 29 hours | at setpoint temperature |
| 29 - 43 hours | setpoint temperature to 600 |
| 43 + hours | removed from furnace |

The diagnostic for the various samples was weight gain measurement of the total crucible and load. As used herein, "weight gain" is meant to refer to the ratio of the total change in weight of the crucible/aluminum oxide bed/ingot prior to and after the furnace cycle noted above to the original weight of the parent metal, the weight gain being expressed in gram per gram (g/g). Where major conversion of the aluminum to $Al_2O_3$ occurs, this ratio increases toward a maximum theoretical value of about 0.89, with any difference allowing for residual unreacted aluminum in the parent alloy, plus from near zero to as much as 35 to 40 percent of an included metallic phase in the resultant product. The weight gains of various aluminum/magnesium/silicon alloys, without correction for removal of moisture from the bed or the crucibles or other experimental errors, at selected furnace setpoint temperatures are graphically illustrated in FIGURE 1. It can be seen from FIGURE 1 in the case of employing an aluminum-based parent metal system to react with air to grow an aluminum oxide material of the present invention that no weight gain of any significance is observed, and consequently no ceramic structure produced, without the use of the initiator dopant (in this case, magnesium).

EXAMPLE 2

To determine the effect that a Group 4B element would have upon the formation of a ceramic material of the present invention, from an aluminum-based parent metal, aluminum alloyed with 2% by weight magnesium and between 1-10% by weight silicon was processed in air at furnace setpoint temperatures ranging between 1125° -1400° C. The observed weight gains of such samples illustrating the growth of a ceramic material of the present invention are graphically shown in FIGURE 2 and hardness data (i.e. Rockwell A hardness) as well as electrical conductivity of selected samples are tabulated below in Table 2A and 2B, respectively. In each instance, the furnace cycles, ingot sizes, and bed composition and configurations were identical to those used in Example 1, above. It has been discovered in the present invention that Group 4B elements serve to modify the surface energy relationship between aluminum-based parent metal systems and alpha aluminum oxide so as to permit the ceramic growth mechanism of the present invention. These elements, then, serve as accelerator dopants. FIGURE 2 shows very clearly that the elimination of the silicon accelerator dopant in a ternary aluminum/magnesium/silicon parent metal system eliminates the entire ceramic growth phenomenon.

## TABLE 2A

| %Si | 1125°C | 1150°C | 1200°C | 1250°C | 1300°C | 1350°C |
|-----|--------|--------|--------|--------|--------|--------|
| 10  | 68.5   | 52.0   | 63.6   | 70.3   | 71.5   | 78.0   |
| 7   |        |        | 66.0   | 73.4   | 75.3   | 81.7   |
| 5   |        |        |        | 76.7   | 72.3   | 81.0   |
| 3   |        |        |        | 70.4   | 76.0   | 83.3   |
| 1   |        |        |        | 74.4   | 77.8   |        |

## TABLE 2B

| %Si | 1125°C   | 1150°C    | 1200°C    | 1250°C    |
|-----|----------|-----------|-----------|-----------|
| 10  | <05 Ohm  | >100 MOhm | >100 MOhm | >100 MOhm |
| 7   |          |           | >100 MOhm | >100 MOhm |
| 5   |          |           |           | >100 MOhm |
| 3   |          |           |           | >100 MOhm |
| 1   |          |           |           | >100 MOhm |

| 1300°C    | 1350°C          |
|-----------|-----------------|
| >100 MOhm | >100 MOhm       |
| >100 MOhm | >100 MOhm       |
| >100 MOhm | >100 MOhm       |
| >100 MOhm | >10-100   Ohms  |
| >100 MOhm |                 |

EXAMPLE 3

To determine the effect that elimination or near elimination of the accelerator dopant would have upon the formation of a ceramic material of the present invention from an aluminum parent based metal, a 5.08 cm by 22.86 cm by 1.27 cm sample of an aluminum alloy containing about 2.4% of the initiator dopant magnesium and less than 0.4% of an accelerator dopant (i.e., Si, Sn, Ge, and Pb) was embedded in technical grade alumina refractory grain (ninety mesh Norton El) in a suitable refractory container. The sample was brought from room temperature to a processing setpoint temperature of 1250°C in a ten hour period and was processed in air for forty eight hours at the setpoint temperature, after which it was cooled to room temperature in roughly ten hours. The weight gain as defined in Example 1 was negligible and was computed to be 1.09 g/g.

EXAMPLE 4

To determine the effect that the Group 4B element Ge would have on the formation of a ceramic material of the present invention from an aluminum based parent metal, aluminum alloyed with 3% magnesium by weight as the initiator, and further alloyed with 3% and 5% by weight germanium, was cast into ingots in the manner described in Example 1. Samples were processed into a ceramic material of the present invention at selected process temperatures of 1200°C and 1325°C in air in a manner identical to the process used in Examples 1 and 2. The weight gain data at 1200 and 1325°C for these aluminum/magnesium/germanium alloys were as follows:

## Weight Gain

| %Ge | 1200°C | 1325°C |
|-----|--------|--------|
| 3   | 0.04   | 0.73   |
| 5   | 0.71   | 0.73   |

EXAMPLE 5

In order to determine the effect of the Group 4B element tin upon the formation of a ceramic material of the present invention from an aluminum based parent metal, aluminum alloyed with 2% by weight magnesium, and further alloyed with 10%, 5%, and 3% by weight tin was cast into 2.54 cm diameter ingots and cut into 2.54 cm long billets for processing, in a manner identical to that described in Example 1 at setpoint temperatures of 1200°C and 1325°C. Weight gain data at 1200°C and 1325°C were as follows:

## Weight Gain

| %Sn | 1200°C | 1325°C |
|-----|--------|--------|
| 10  | 0.74   | 0.71   |
| 5   | 0.56   | 0.22   |
| 3   | 0.69   | 0.29   |

EXAMPLE 6

To determine the effect that the Group 4B element lead would have upon the formation of a ceramic material of the present invention from an aluminum based parent metal, aluminum alloyed with 3% by weight magnesium and between 1-10% by weight lead was prepared for processing. Samples were prepared by adding 5% by weight lead to an alloy of 97% aluminum/3% magnesium at a temperature of 1000°C, and the resulting molten alloys were cast into 2.54 cm diameter ingots 2.54 to 6.35 cm long for processing into a ceramic material. For the preparation of 10% lead/10% tin/Mg/Al alloys, both the tin and the lead were added to the molten aluminum/magnesium alloy at 1000°C. Ingots were embedded in 90 mesh aluminum oxide refractory grain with the top surface flush with the surface of the bedding and thus exposed to an air atmosphere. Processing followed a furnace schedule identical to that of Examples 1 and 2 above, except for 48 hours residual time at a 1250°C setpoint temperature, and 10 hours for cool down to less than 600°C, whereon the samples were removed. Weight gain figures were as follows:

EP 0 155 831 B1

|  | Weight Gain |
| Dopants | (g/g) |
| 10% lead/10% tin/3% magnesium | 0.46 |
| 5% lead/3% magnesium | 0.47 |
| 1% lead/3% magnesium | 0.20 |
| 5% lead/0% magnesium | 0.03 |

EXAMPLE 7

To determine levels of allowable diluents which could be tolerated with negligible effect upon formation of a ceramic material of the present invention, processing was carried out with at least the following known diluents in an aluminum alloy containing 1% of the initiator magnesium and 0.6% of the accelerator silicon:

| Diluent Species | Weight % of Diluent |
| --- | --- |
| Copper | 0.1% |
| Chromium | 0.2% |
| Iron | 0.3% |
| Manganese | 0.1% |
| Titanium | 0.2% |

A 5.08 cm by 22.86 cm by 1.27 cm sample of this aluminum alloy parent material was embedded in ninety mesh refractory alumina grain (Norton 38) within a suitable refractory tray with the 5.08 cm by 22.86 cm surface substantially flush with the bed and exposed to the air atmosphere within the furnace. The sample was brought to the processing setpoint temperature of 1325° C in a four hour period, processed for thirty hours at the setpoint temperature, and cooled to room temperature over a ten hour period. The weight gain, as defined in Example 1 was unaffected by such diluent species and was observed to be 0.63 g/g.

**Claims**

1. A method for producing a self-supporting ceramic article by oxidation of a liquid-phase parent metal in the presence of a vapor-phase oxidizing environment to form a polycrystalline oxidation reaction product

    characterized in that the oxidation reaction product consists essentially of (1) a ceramic phase consisting of the oxidation reaction product of said parent metal with the vapor-phase oxidant, and (2) a metallic phase consisting of one or more non-oxidized constituents of said parent metal, and that the method comprises
    (a) heating a parent metal which contains at least one dopant alloyed into said parent metal to a temperature above the melting point of said parent metal to form a body of molten metal and, at said temperature,
    (b) reacting said body of molten metal with said vapor-phase oxidant to form said oxidation reaction product,
    (c) maintaining the surface of the oxidation reaction product in contact with said oxidant to draw molten metal through the oxidation reaction product towards the oxidant so that oxidation reaction product continues to form at the interface between the oxidant and previously formed oxidation reaction product, and
    (d) continuing said reaction for a time sufficient to produce said ceramic article.

2. A method as claimed in claim 1, wherein the oxidizing environment comprises air or oxygen.

14

3. A method as claimed in claim 1 or 2, wherein the parent metal is aluminum or an aluminum alloy.

4. A method as claimed in claim 3 as appendant to claim 2, wherein the parent metal contains at least two dopants.

5. A method as claimed in claim 4, wherein one of the dopants is magnesium.

6. A method as claimed in claim 4 or claim 5, wherein one of the dopants is silicon, tin, germanium or lead.

7. A method as claimed in claim 6 as appendant to claim 5, wherein the magnesium is present in an amount of from 0.3% to 10% and the silicon, tin, germanium or lead is present in an amount of from 0.5% to 10%, all percentages being based on the total weight of the aluminum alloy.

8. A method as claimed in any one of claims 3 to 7, wherein the process temperature is from about 1000°C to 1450°C.

9. A method as claimed in any one of claims 1 to 8, wherein said reaction is continued for a time substantially beyond the exhaustion of the molten alloy to produce a porous ceramic article.

10. A method as claimed in any one of claims 1 to 9, wherein said reaction is practized to form inclusions of metal in said ceramic article.

11. A method as claimed in any one of claims 1 or 3 to 9, wherein the vapor-phase oxidant is oxygen, nitrogen, a halogen, carbon, boron and combinations thereof.

12. A ceramic article produced by a method as claimed in any one of the preceding claims.

**Revendications**

1. Procédé de production d'un article céramique autoporteur par oxydation d'un métal-mère en phase liquide en présence d'un environnement oxydant en phase vapeur pour former un produit polycristallin de réaction d'oxydation
caractérisé en ce que le produit de réaction d'oxydation est essentiellement constitué (1) d'une phase céramique formée du produit de réaction d'oxydation dudit métal-mère avec l'oxydant en phase vapeur et (2) d'une phase métallique formée d'un ou plusieurs constituants non oxydés dudit métal-mère, et en ce qu'il consiste
(a) à chauffer un métal-mère qui contient au moins un dopant incorporé par alliage à une température au-dessus du point de fusion dudit métal-mère pour former un corps de métal fondu et, à ladite température,
(b) à faire réagir ledit corps de métal fondu avec ledit oxydant en phase vapeur pour former ledit produit de réaction d'oxydation,
(c) à maintenir la surface du produit de réaction d'oxydation au contact dudit oxydant pour attirer le métal fondu à travers le produit de réaction d'oxydation vers l'oxydant de manière que le produit de réaction d'oxydation continue de se former à l'interface entre l'oxydant et le produit de réaction d'oxydation antérieurement formé, et
(d) à poursuivre ladite réaction pendant un temps suffisant pour produire ledit article céramique.

2. Procédé suivant la revendication 1, dans lequel l'environnement oxydant comprend de l'air ou de l'oxygène.

3. Procédé suivant la revendication 1 ou 2, danss lequel le métal-mère est l'aluminium ou un alliage d'aluminium.

4. Procédé suivant la revendication 3 subordonnée à la revendication 2, dans lequel le métal-mère contient au moins deux dopants.

5. Procédé suivant la revendication 4, dans lequel l'un des dopants est le magnésium.

6. Procédé suivant la revendication 4 ou la revendication 5, dans lequel l'un des dopants est le silicium, l'étain, le germanium ou le plomb.

7. Procédé suivant la revendication 6 subordonnée à la revendication 5, dans lequel le magnésium est présent en une quantité de 0,3 à 10 % et le silicium, l'étain, le germanium ou le plomb est présent en une quantité de 0,5 à 10 %, tous les pourcentages étant basés sur le poids total de l'alliage d'aluminium.

8. Procédé suivant l'une quelconque des revendications 3 à 7, dans lequel la température de mise en oeuvre va d'environ 1000 à 1450° C.

9. Procédé suivant l'une quelconque des revendications 1 à 8, dans lequel ladite réaction est poursuivie pendant un temps notablement au-delà de l'épuisement de l'alliage fondu pour produire un article céramique poreux.

10. Procédé suivant l'une quelconque des revendications 1 à 9, dans lequel ladite réaction est conduite de manière à former des inclusions de métal dans ledit article céramique.

11. Procédé suivant l'une quelconque des revendications 1 ou 3 à 9, dans lequel l'oxydant en phase vapeur est l'oxygène, l'azote, un halogène, le carbone, le bore et leurs mélanges.

12. Article céramique produit par un procédé suivant l'une quelconque des revendications précédentes.

**Patentansprüche**

1. Verfahren zur Herstellung eines selbsttragenden keramischen Gegenstands durch Oxidation eines Grundmetalls in schmelzflüssiger Phase in Gegenwart einer oxidierenden Dampfphasen-Umgebung unter Ausbildung eines polykristallinen Oxidationsreaktionsprodukts,
dadurch gekennzeichnet, daß das Oxidationsreaktionsprodukt im wesentlichen besteht aus (1) einer keramischen Phase, die aus dem Oxidationsreaktionsprodukt des genannten Grundmetalls mit dem Dampfphasen-Oxidationsmittel besteht, sowie (2) einer metallischen Phase, die aus einem oder mehreren nicht-oxidierten Bestandteilen des genannten Grundmetalls besteht, und daß das Verfahren umfaßt
   (a) Erhitzen eines Grundmetalls, das wenigstens ein in das Grundmetall legiertes Dotierungsmittel enthält, auf eine Temperatur oberhalb des Schmelzpunkts des genannten Grundmetalls unter Ausbildung eines Körpers aus schmelzflüssigem Metall und, bei der genannten Temperatur,
   (b) Umsetzen des genannten Körpers aus schmelzflüssigem Metall mit dem genannten Dampfphasen-Oxidationsmittel unter Ausbildung des Oxidationsreaktionsprodukts,
   (c) In-Kontakt-Halten der Oberfläche des Oxidationsreaktionsprodukts mit dem genannten Oxidationsmittel, um schmelzflüssiges Metall durch das Oxidationsreaktionsprodukt in Richtung des Oxidationsmittels zu ziehen, so daß sich fortgesetzt an der Grenzfläche zwischen dem Oxidationsmittel und vorher gebildetem Oxidationsreaktionsprodukt Oxidationsreaktionsprodukt bildet, und
   (d) Fortsetzen der genannten Reaktion für eine solche Zeit, die ausreicht, um den genannten keramischen Gegenstand herzustellen.

2. Verfahren nach Anspruch 1, worin die oxidierende Umgebung Luft oder Sauerstoff umfaßt.

3. Verfahren nach Anspruch 1 oder 2, worin das Grundmetall Aluminium oder eine Aluminiumlegierung ist.

4. Verfahren nach Anspruch 3, wenn dieser auf Anspruch 2 zurückbezogen ist, worin das Grundmetall wenigstens zwei Dotierungsmittel enthält.

5. Verfahren nach Anspruch 4, worin eines der Dotierungsmittel Magnesium ist.

6. Verfahren nach Anspruch 4 oder Anspruch 5, worin eines der Dotierungsmittel Silicium, Zinn, Germanium oder Blei ist.

7. Verfahren nach Anspruch 6, wenn dieser auf Anspruch 5 zurückbezogen ist, worin das Magnesium in einer Menge von 0,3 % bis 10 % und das Silicium, Zinn, Germanium oder Blei in einer Menge von 0,5 % bis 10 % vorhanden sind, wobei alle Prozentangaben sich auf das Gesamtgewicht der Aluminiumlegierung beziehen.

8. Verfahren nach irgendeinem der Ansprüche 3 bis 7, worin die Verfahrenstemperatur von etwa 1000° C bis 1450° C beträgt.

9. Verfahren nach irgendeinem der Ansprüche 1 bis 8, worin die genannte Reaktion für eine Zeit wesentlich über die Erschöpfung der schmelzflüssigen Legierung hinaus fortgesetzt wird, um einen porösen keramischen Gegenstand herzustellen.

10. Verfahren nach irgendeinem der Ansprüche 1 bis 9, worin die genannte Reaktion so durchgeführt wird, daß sich in dem genannten keramischen Gegenstand Metalleinschlüsse bilden.

11. Verfahren nach irgendeinem der Ansprüche 1 oder 3 bis 9, worin das Dampfphasen-Oxidationsmittel Sauerstoff, Stickstoff, ein Halogen, Kohlenstoff, Bor oder Kombinationen davon ist.

12. Ein keramischer Gegenstand, der hergestellt wurde nach einem Verfahren, wie es in irgendeinem der vorausgehenden Ansprüche beansprucht wird.

3% Si / 0 - 10% Mg WEIGHT GAIN vs SET POINT TEMPERATURE

24 HOURS AT SET POINT

FIG. 1
(EX. 1)

EP 0 155 831 B1

2% Mg / 1 - 10% Si WEIGHT GAIN vs SET POINT TEMPERATURE

24 HOURS AT SET POINT

FIG. 2 (EX.2)

FIG. 3

FIG. 6

FIG. 4

FIG. 5

FIG. 7

FIG. 8

FIG. 9a

0.3 MICRON α AL$_2$O$_3$
(LINDE A)

(012) 3.473 73%

(104) 2.549 100%

(110) 2.377 41%

(113) 2.085 97%

(024) 1.740 (41%)

(116) 1.601 79%

(122 + 018) (211) 1.545 1%

(030) 1.373 40% (124) 1.404 (27%)

(1·0·10) 1.239 10%

(220) 1.189 3%

(223) 1.147 3%

(312) 1.125 2%

(1.028 5% (134) (1.083 1% (0·0·12) (1.098 4% (0·2·10)

1.018 6% (402)

1.042 9% (226)

100   90   80   70   60   50   40   30   20

◄—— DEGREES 2-THETA (Cu Kα RADIATION)

EP 0 155 831 B1

FIG. 9b

← DEGREES 2-THETA (Cu Kα RADIATION)

EP 0 155 831 B1

FIG. 9c

SHADED PEAKS = ALUMINUM

CERAMIC MATERIAL OF THIS INVENTION

(CRUSHED TO LESS THAN 32 MICRONS)

DEGREES 2-THETA (Cu Kα RADIATION)

GROWTH DIRECTION ⟶

100 μm

mg

AL

FIG. 10

FIG. 11a

typical low-angle
grain boundary

$Al_2O_3$

$Al_2O_3$

200 nm

FIG. IIb

41

$Al_2O_3$

$Al_2O_3$

sp 4

500 nm

FIG. IIc

$Al_2O_3$-$Al_2O_3$

LOW-ANGLE GRAIN BOUNDARIES
TWO NEIGHBOR GRAINS WITH
ALMOST THE SAME ORIENTATION

FIG. IId

high angle
$Al_2O_3/Al_2O_3$

$Al_2O_3$

$Al_2O_3$

Al

200 nm

FIG. IIe

high angle
$Al_2O_3/Al_2O_3$

$Al_2O_3$

Al

$Al_2O_3$

200 nm